# EUROPEAN PATENT APPLICATION

(11) **EP 4 450 527 A1**
(43) Date of publication of application: **23.10.2024**
(21) Application number: 24169878.6
(22) Date of filing: 12.04.2024
(51) Int. Cl.: C08F 14/06, C08L 27/06

(54) **METHANOL-FREE ORGANIC PEROXIDE EMULSION**

(30) Priority: 19.04.2023 EP 23168827
(71) Applicant: Nouryon Chemicals International B.V., 1101 BZ Amsterdam (NL)
(72) Inventor: GERRITSEN, René, 1101 BZ Amsterdam (NL); VANDUFFEL, Koen Antoon Kornelis, 1101 BZ Amsterdam (NL); KEIJZER, Ester Elisabeth Antonia, 1101 BZ Amsterdam (NL)
(74) Representative: LKGlobal UK Ltd.

(57) **Abstract**

The present disclosure relates to an emulsion comprising:
a) 25-70 wt.% di-n-butyl peroxydicarbonate or di-sec-butyl peroxydicarbonate,
b) a polyvinyl acetate having a degree of hydrolysis of 50-90 mole%,
c) at least one emulsifier,
d) at least one cyclohexane dicarboxylate ester,
e) ethanol,
f) at least one C2-C6 monohydric or polyhydric alcohol different to e), and
g) water.

## Description

### Technical Field

The present disclosure relates to a methanol-free emulsion of dibutyl peroxydicarbonate, a process for the preparation thereof as well as the use thereof for the polymerization or copolymerization of one or more ethylenically unsaturated monomers.

### Background

As is well known, organic peroxides are thermally labile compounds. Because the decomposition of these peroxides is exothermic, it is hazardous when the heat of decomposition cannot be dissipated, e.g., by heat loss to the surrounding area. When heat accumulates, the decomposition reaction may run out of control. To avoid such undesired situation, the peroxide typically is formulated with one or more phlegmatizing agents. One example of a phlegmatizing agent is water.

Aqueous organic peroxide emulsions are generally considered safe products because the peroxide is dispersed - forming small droplets - in the water phase, which water phase is well-suited for the removal of the heat of decomposition by, for instance, convection and/or evaporation. However, many aqueous organic peroxide emulsions are not sufficiently stable upon storage. Although emulsion formulations are well optimised with respect to viscosity and droplet size, droplet growth remains a problem, resulting in a short emulsion shelf life time. The growth of droplets may (eventually) result in layer separation of the emulsion, causing a formulation which was thought to be safe to become unsafe.

Most aqueous organic peroxide emulsions used commercially are stored at low temperatures, typically -25°C to 0°C. This requires the use of an antifreeze agent, and the most commonly used antifreeze agent is methanol. In view of the high volatility of methanol (which has led to a ban in the USA of the use of methanol in organic peroxide emulsions, because of regulatory issues, i.e. methanol is a hazardous air pollutant - on the EPA-HAP list), it would be preferable to produce organic peroxide emulsions that do not contain methanol.

Organic peroxides that have proven to be particularly difficult to formulate as a stable emulsion are di-n-butyl peroxydicarbonate and di-sec-butyl peroxydicarbonate, particularly di-sec-butyl peroxydicarbonate.

WO 2021/234322 of Arkema France discloses stable organic peroxide emulsions that contain ethanol. Whilst WO 2021/234322 speculatively lists dibutyl peroxydicarbonate as one of many peroxides that may be stably emulsified by the process disclosed therein, WO 2021/234322 fails to exemplify that.

WO 2022/243610 of Arkema France provides one worked example of an "emulsion" of di-sec-butyl peroxydicarbonate ("Luperox^{®} 225") comprising 13.5% ethanol (Example 1, Composition No. 8). As shown in Table 4, that emulsion was completely unstable, demulsifying in under two hours.

WO 2021/234311 of Arkema France also provides an example of an emulsion of di-sec-butyl peroxydicarbonate ("Luperox^{®} 225") comprising 10% ethanol (Example 1, emulsion A3). As shown in Table 3, emulsion A3 was the only emulsion of Luperox 225 to demulsify during the test period. It should be noted that the stability data provided in Table 3 is unreliable, as emulsion A3 (apparently stable for four months) is essentially identical (compositionally) to the completely unstable emulsion "Composition No. 8" of WO 2022/243610 (same peroxide in same amount, ethoxylated non-ionic surfactants in essentially the same amount, essentially same amount of propane-1,2-diol, similar amount of ethanol). It is implausible that two essentially identical emulsions have such drastically different stability profiles, particularly in view of what is disclosed in WO 2021/234323.

In that respect, the lack of storage stability for the above mentioned worked examples of WO 2022/243610 and WO 2021/234311 is explained in WO 2021/234323 of **Arkema France,** wherein it is expressly stated by the author common to all of the above WO publications **(Arkema France)** that it is not possible to form a stable emulsion ("stable" defined in WO 2021/234323 as stable for a period 3 or more months) of di-sec-butyl peroxydicarbonate when methanol and/or ethanol is present in the formulation. This inability to form a stable emulsion of di-sec-butyl peroxydicarbonate is further exemplified in WO 2021/234323, wherein all of the emulsions comprising ethanol (Composition Nos. 2, 4, 6 and 10) demulsified in under two months. Composition No. 6 of WO 2021/234323 is also highly analogous to emulsion A3 of WO 2021/234311, and, like Composition No. 8 of WO 2022/243610, was shown to be unstable (demulsified in less than a month). The disclosure of WO 2021/234323 thus casts further doubts upon the veracity of the stability data presented in WO 2021/234311, as WO 2021/234323 filed on the same date as WO 2021/234311 (20 May 2021) by the same author **(Arkema France)** expressly states - and demonstrates with empirical studies - that it is not possible to produce a stable emulsion (i.e., stable for 3 or more months) of di-sec-butyl peroxydicarbonate with ethanol as the antifreeze agent due to the known compatibility issues that exist between methanol/ethanol and di-sec-butyl peroxydicarbonate.

Thus, according to the common author of WO 2021/234322, WO 2022/243610, WO 2021/234311, and WO 2021/234311 (Arkema France) it is not possible to form a stable emulsion (i.e., stable for 3 months or more) of dibutyl peroxydicarbonate when methanol and/or ethanol is present in the formulation (i.e., according to the common author of those WO publications, none of those disclosures enable the skilled person to produce a stable emulsion of dibutyl peroxydicarbonate that contains methanol and/or ethanol). The proposed solution in WO 2022/243610 was to simply not use methanol or ethanol in the emulsion (Example 1, Composition Nos. 6, 7 and 9). The proposed solution in WO 2021/234311 was to use a combination of peroxides with di-sec-butyl peroxydicarbonate being a minor component (12%) of the emulsion (Example 2), which is not a useful technical solution if the objective is to prepare an emulsion of di-sec-butyl peroxydicarbonate. The proposed solution in WO 2021/234323 was also to simply not use ethanol or methanol in the emulsion, and instead use substantial amounts (>20 wt.%) of propylene glycol as the antifreeze agent.

In view of the abundance, bio-renewability, and (generally) much lower cost of ethanol vs propylene glycol, it would be highly beneficial from an industrial viewpoint if it was possible to replace at least some of the glycol with ethanol. According to Arkema France (WO 2021/234322, WO 2022/243610, and WO 2021/234323), however, such a replacement would be impossible without severely compromising the storage stability of the emulsion.

In view of this, it was very surprising that the present inventors found a way (i.e., a specific combination of chemical components) to form a highly stable aqueous emulsion of dibutyl peroxydicarbonate which includes ethanol as an antifreeze agent. Per the above, this is beneficial because ethanol is a very cheap, abundant, and easily renewable antifreeze agent.

### Description

Accordingly, in a first aspect, the present disclosure relates to an aqueous organic peroxide emulsion comprising:
a) 25-70 wt.% of di-n-butyl peroxydicarbonate or di-sec-butyl peroxydicarbonate,
b) a polyvinyl acetate having a degree of hydrolysis of 50-90 mole%,
c) at least one emulsifier,
d) at least one cyclohexane dicarboxylate ester,
e) ethanol,
f) at least one C2-C6 monohydric or polyhydric alcohol different to e), and
g) water.

This formulation not only includes ethanol as an antifreeze agent, but also does not require methanol to form a stable organic peroxide emulsion. As such, this may be viewed as a methanol-free aqueous emulsion of dibutyl peroxydicarbonate. According to the technical teachings of WO 2021/234323, it should not have been possible to produce this stable aqueous emulsion.

Component a) is di-n-butyl peroxydicarbonate (CAS No. 16215-49-9) or di-sec-butyl peroxydicarbonate (CAS No. 19910-65-7). Preferably, component a) is di-sec-butyl peroxydicarbonate. The aqueous organic peroxide emulsion contains the di-n-butyl peroxydicarbonate or di-sec-butyl peroxydicarbonate in an amount of from 25-70 wt.% based on the total weight of the emulsion. Preferably, the amount of organic peroxide in the emulsion is 30-65 wt%, more preferably 35-60 wt%, most preferably 40-60 wt%.

Component b) is a polyvinyl acetate (PVA) having a degree of hydrolysis of 50-90 mole%, preferably 55-80 mole%, and most preferably 60-70 mole%. The amount of PVA used in the emulsions according to the present invention may typically be between 0.5 and 10 wt%, preferably between 0.5 and 5 wt%, more preferably between 1 wt% and 4 wt%, based on the total weight of the emulsion.

Component c) is at least one emulsifier. Suitable emulsifiers are known to the person skilled in this art and they include non-ionic, anionic, cationic, and amphoteric surfactants, and mixtures thereof. They may be incorporated in their usual amounts, typically about 0.5 wt% to about 5 wt%. Preferably, a non-ionic surfactant, more preferably having an HLB (hydrophile-lipophile balance) value of 7 or higher, even more preferably 16 or higher, is used.

Component d) is at least one cyclohexane dicarboxylate ester. Examples of suitable cyclohexane dicarboxylate esters are:
- di-alkyl-cyclohexane-1,2-dicarboxylates, such as di-n-octyl cyclohexane-1 ,2-dicarboxylate, diisooctyl cyclohexane-1 ,2-dicarboxylate, di-2-ethylhexyl cyclohexane-1 ,2-dicarboxylate, di-n-nonyl cyclohexane-1 ,2-dicarboxylate, diisononyl cyclohexane-1,2-dicarboxylate, di-n-decyl cyclohexane-1,2-dicarboxylate, diisodecyl cyclohexane-1,2-dicarboxylate, di-n-undecyl cyclohexane-1,2-dicarboxylate, diisododecyl cyclohexane-1,2-dicarboxylate, din-octadecyl cyclohexane-1,2-dicarboxylate, diisooctadecyl cyclohexane-1,2-dicarboxylate, di-n-eicosyl cyclohexane-1,2-dicarboxylate, monocyclohexyl cyclohexane-1,2-dicarboxylate, dicyclohexyl cyclohexane-1,2-dicarboxylate din-hexyl cyclohexane-1,2-dicarboxylate, diisohexyl cyclohexane-1,2-dicarboxylate, di-n-heptyl cyclohexane-1,2-dicarboxylate, diisoheptyl cyclohexane-1,2-dicarboxylate, di-2-propylheptyl cyclohexane-1,2-dicarboxylate, diisoundecyl cyclohexane-1,2-dicarboxylate, di-n-dodecyl cyclohexane-1,2-dicarboxylate, di-n-tridecyl cyclohexane-1,2-dicarboxylate, diisotridecyl cyclohexane-1,2-dicarboxylate, di-n-pentyl cyclohexane-1,2-dicarboxylate, and diisopentyl cyclohexane-1,2-dicarboxylate,
- di-alkyl-cyclohexane-1,4-dicarboxylates, such as di-n-octyl cyclohexane-1,4-dicarboxylate, diisooctyl cyclohexane-1,4-dicarboxylate, mono-2-ethylhexyl cyclohexane-1,4-dicarboxylate, di-2-ethylhexyl cyclohexane-1,4-dicarboxylate, di-n-nonyl cyclohexane-1,4-dicarboxylate, diisononyl cyclohexane-1,4-dicarboxylate, di-n-decyl cyclohexane-1,4-dicarboxylate, di-n-undecyl cyclohexane-1,4-dicarboxylate, diisodecyl cyclohexane-1,4-dicarboxylate, diisododecyl cyclohexane-1,4-dicarboxylate, di-n-octadecyl cyclohexane-1,4-dicarboxylate, diisooctadecyl cyclohexane-1,4-dicarboxylate, di-n-eicosyl cyclohexane-1,4-dicarboxylate, monocyclohexyl cyclohexane-1,4-dicarboxylate, dicyclohexyl cyclohexane-1,4-dicarboxylate, di-n-hexyl cyclohexane-1,4-dicarboxylate, diisohexyl cyclohexane-1,4-dicarboxylate, di-n-heptyl cyclohexane-1,4-dicarboxylate, diisoheptyl cyclohexane-1,4-dicarboxylate, di-2-propylheptyl cyclohexane-1,4-dicarboxylate, diisoundecyl cyclohexane-1,4-dicarboxylate, di-n-dodecyl cyclohexane-1,4-dicarboxylate, di-n-tridecyl cyclohexane-1,4-dicarboxylate, diisotridecyl cyclohexane-1,4-dicarboxylate, din-pentyl cyclohexane-1,4-dicarboxylate, diisopentyl cyclohexane-1,4-dicarboxylate; and
- di-alkyl cyclohexane-1,3-dicarboxylates, such as di-n-octyl cyclohexane-1,3-dicarboxylate, diisooctyl cyclohexane-1,3-dicarboxylate, di-2-ethylhexyl cyclohexane-1,3-dicarboxylate, di-n-nonyl cyclohexane-1,3-dicarboxylate, diisononyl cyclohexane-1,3-dicarboxylate, di-n-decyl cyclohexane-1,3-dicarboxylate, diisodecyl cyclohexane-1,3-dicarboxylate, di-n-undecyl cyclohexane-1,3-dicarboxylate, diisododecyl cyclohexane-1,3-dicarboxylate, din-octadecyl cyclohexane-1,3-dicarboxylate, diisooctadecyl cyclohexane-1,3-dicarboxylate, di-n-eicosyl cyclohexane-1,3-dicarboxylate, monocyclohexyl cyclohexane-1,3-dicarboxylate, dicyclohexyl cyclohexane-1,3-dicarboxylate, din-hexyl cyclohexane-1,3-dicarboxylate, diisohexyl cyclohexane-1,3-dicarboxylate, di-n-heptyl cyclohexane-1,3-dicarboxylate, diisoheptyl cyclohexane-1,3-dicarboxylate, di-2-propylheptyl cyclohexane-1,3-dicarboxylate, diisoundecyl cyclohexane-1,3-dicarboxylate, di-n-dodecyl cyclohexane-1,3-dicarboxylate, di-n-tridecyl cyclohexane-1,2-dicarboxylate, diisotridecyl cyclohexane-1,3-dicarboxylate, di-n-pentyl cyclohexane-1,3-dicarboxylate, and diisopentyl cyclohexane-1,3-dicarboxylate.

Preferably, the cyclohexane dicarboxylate esters is a di-alkyl cyclohexane-1,2-dicarboxylate. Most preferably, it is di-isononyl-1,2-cyclohexane dicarboxylate (more commonly referred to as "DINCH"). The cyclohexane dicarboxylate ester may typically be used in an amount of 0.1 wt% to 10 wt%, preferably 0.5 wt% to 5 wt%, more preferably, 0.5 wt% to 3 wt%, most preferably 0.5 wt% to 2 wt%, based on the total weight of the emulsion.

Component e) is ethanol. The aqueous organic peroxide emulsion preferably contains ethanol in an amount of from 5-20 wt.% based on the total weight of the emulsion. Preferably, the amount of ethanol in the emulsion is 7-15 wt%, more preferably 8-12 wt%.

Component f) is at least one C2-C6 monohydric or polyhydric alcohol different to ethanol. Preferred C2-C6 monohydric or polyhydric alcohols are selected from ethylene glycol, 2-propanol, 1-propanol, propane-1,2-diol, propan-1,3-diol, glycerol, butan-1-ol, butan-2-ol, butan-1,3-diol, butan-1,4-diol, diethylene glycol, triethylene glycol and mixtures thereof. The C2-C6 polyhydric alcohols are preferred. Glycerol is most preferred. The aqueous organic peroxide emulsion preferably contains the at least one C2-C6 monohydric or polyhydric alcohol (excluding ethanol) in a total amount of from 5-20 wt.% based on the total weight of the emulsion. Preferably, the amount of C2-C6 monohydric or polyhydric alcohol in the emulsion (excluding ethanol) is 7-15 wt%, more preferably 8-12 wt%.

Preferably the total combined amount of components e) and f) is from 10-40 wt%, preferably 12-30 wt%, and more preferably 15-25 wt%, based on the total weight of the emulsion. Preferably, the weight ratio of components e) to f) is from 3:1 to 1:3, preferably from 2:1 to 1:2, more preferably about 1:1.

The final component g) is water. The amount of water in the emulsion preferably ranges from 20-70 wt%, more preferably 25-50 wt%, and most preferably 25-40 wt%.

The aqueous organic peroxide emulsions of the present invention optionally may also contain other additives including pH-adjusting agents such as phosphate and citrate buffers, sequestering agents, biocides, e.g. fungicides, antiozonants, antioxidants, antidegradants, U.V. stabilizers, coagents, comonomers, antistatic agents, blowing agents, mould release agents, and process oils. These additives may be added in their usual amounts.

The emulsions of the present invention can be produced in a conventional manner. Typically, the ingredients of the emulsion are mixed and/or homogenized using well-known equipment, such as high-speed mixers, colloid mills, pearl mills, ball mills, pressure homogenizers, fluidizers, and ultrasonic homogenizers. Because many of the organic peroxides which are used in accordance with the present invention are not stable at higher temperatures, the mixing and/or homogenizing typically is carried out below a temperature of 15°C, preferably, well below the self-accelerating decomposition temperature (SADT) of the organic peroxide.

The present invention also relates to the use of the above-described aqueous organic peroxide emulsions in polymerization processes, cross-linking reactions, the curing of unsaturated polyester resins, polymer modification processes, and other reactions involving free radicals, like the synthesis of certain chemicals.

The emulsions of the present invention preferably are used in polymerization processes, more preferably, the polymerization of vinyl chloride monomer (VCM) and co-polymerization of VCM with styrene or (meth)acrylate. Most preferred is the use of the emulsion in accordance with the present invention in a suspension polymerization process for preparing PVC.

The present invention is further illustrated by the following Example.

### EXAMPLE

### General procedure

In the following example, the aqueous organic peroxide emulsion was made by the following general procedure: To a cooled vessel (-10°C), containing a pre-prepared PVA-alcohol mixture comprising PVA (polyvinyl acetate, degree of hydrolysis 62.5-67.5%), emulsifier (C16/C18 ethoxylated alcohol), di-isononyl-1,2-cyclohexane dicarboxylate (DINCH), ethanol, glycerol, and water, was added di-sec-butyl peroxydicarbonate (final content is 50 wt%, based on the total weight of the emulsion). Amounts of each component are set out in the Table below. The organic peroxide was dispersed using an UltraTurrax type S25N-25GM (2.5 minutes/kg of emulsion) at full power, during which the temperature of the emulsion was kept below 0°C.

The droplet volume distribution was determined by means of a light scattering technique, using a Malvern type 3000 apparatus. In the Tables, d99 (expressed in µm) is 99 percentile of the droplet volume distribution of the organic peroxide in the emulsion; d50 (expressed in µm) is 50 percentile of the droplet volume distribution of the organic peroxide in the emulsion. The emulsion samples were stored at -20°C and the data were collected at room temperature.

The viscosity was measured at -10°C with a Brookfield LVT (spindle 3; at 12 and 30 RPM).

| **Component** | **Amount (wt %)** |
|---|---|
| di-sec-butyl peroxydicarbonate | 50 |
| PVA | 3 |
| Emulsifier | 1 |
| DINCH | 1 |
| Glycerol | 10 |
| Ethanol | 10 |
| Water | Balance |

| **Droplet size (µm):** | |
|---|---|
| 1 day - d50 / d99 | 1.0 / 2.5 |
| 2 weeks - d50 / d99 | 1.9 / 3.8 |
| 6 weeks - d50 / d99 | 2.3 / 5.6 |
| 8 weeks - d50 / d99 | 3.1 / 5.3 |
| 12 weeks - d50 / d99 | 4.1 / 8.0 |

| **Viscosity (mPa.s):** | |
|---|---|
| 1 day- 12 / 30 RPM | 1390 / 1272 |
| 2 weeks - 12 / 30 RPM | 1040 / 1016 |
| 6 weeks - 12 / 30 RPM | 1080 / 1008 |
| 8 weeks - 12 / 30 RPM | 1050 / 1012 |
| 12 weeks - 12 / 30 RPM | 920 / 887 |

The above data demonstrates that the aqueous organic peroxide emulsion was highly stable for at least 12 weeks (a 12-week droplet size D99 value of <10 µm is indicative of a highly stable aqueous organic peroxide emulsion). The viscosity remained largely constant, and no layer separation of the aqueous emulsion was observed during the 12-week storage stability test. Thus, contrary to what was deemed technically possible by WO 2021/234323, the inventors have managed to produce a highly stable aqueous emulsion of dibutyl peroxydicarbonate wherein a substantial amount of the antifreeze agent is replaced by ethanol. As noted above, this is highly beneficial from a costs and sustainability viewpoint.

In this specification, unless expressly otherwise indicated, the word 'or' is used in the sense of an operator that returns a true value when either or both of the stated conditions is met, as opposed to the operator `exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. An emulsion comprising:
a) 25-70 wt.% of di-n-butyl peroxydicarbonate or di-sec-butyl peroxydicarbonate,
b) a polyvinyl acetate having a degree of hydrolysis of 50-90 mole%,
c) at least one emulsifier,
d) at least one cyclohexane dicarboxylate ester,
e) ethanol,
f) at least one C2-C6 monohydric or polyhydric alcohol different to e), and
g) water.

2. The emulsion of claim 1, wherein a) is di-sec-butyl peroxydicarbonate.

3. The emulsion of claims 1 or 2, wherein the at least one emulsifier c) is a non-ionic surfactant.

4. The emulsion of any one of the preceding claims, wherein the at least one cyclohexane dicarboxylate ester d) is di-isononyl-1,2-cyclohexane dicarboxylate.

5. The emulsion of any one of the preceding claims, wherein the at least one C2-C6 monohydric or polyhydric alcohol f) is selected from ethylene glycol, 2-propanol, 1-propanol, propane-1,2-diol, propan-1,3-diol, glycerol, butan-1-ol, butan-2-ol, butan-1,3-diol, butan-1,4-diol, diethylene glycol, triethylene glycol, or mixtures thereof.

6. The emulsion of any one of the preceding claims, wherein the at least one C2-C6 monohydric or polyhydric alcohol f) is glycerol.

7. The emulsion of any one of the preceding claims, wherein the emulsion comprises 30-65 wt.% of component a), relative to the total weight of the emulsion.

8. The emulsion of any one of the preceding claims, wherein the emulsion comprises 0.5-10 wt.% of component b), relative to the total weight of the emulsion.

9. The emulsion of any one of the preceding claims, wherein the emulsion comprises 0.5-5 wt.% of component c), relative to the total weight of the emulsion.

10. The emulsion of any one of the preceding claims, wherein the emulsion comprises 0.1-10 wt.% of component d), relative to the total weight of the emulsion.

11. The emulsion of any one of the preceding claims, wherein the emulsion comprises 5-20 wt.% of component e), relative to the total weight of the emulsion.

12. The emulsion of any one of the preceding claims, wherein the emulsion comprises 5-20 wt.% of component f), relative to the total weight of the emulsion.

13. The emulsion of any one of the preceding claims, wherein the emulsion comprises 20-70 wt.% of component f), relative to the total weight of the emulsion.

14. Use of the emulsion according to one of claims 1 to 13 for the polymerization or copolymerization of one or more ethylenically unsaturated monomers.

15. The use of claim 14, wherein the unsaturated monomers are vinyl monomers, preferably halogenated vinyl monomers, and more preferably vinyl chloride.
